# EUROPÄISCHE PATENTANMELDUNG

(11) **EP 2 660 040 A1**
(43) Veröffentlichungstag der Anmeldung: **06.11.2013**
(21) Anmeldenummer: 12166557.4
(22) Anmeldetag: 03.05.2012
(51) Int. Cl.: B32B 7/12, B32B 15/08, B32B 15/09, B32B 15/18, B32B 15/20, B32B 27/08, B32B 27/40, B32B 15/085, B32B 27/30, B32B 27/36, B32B 15/082, B32B 15/095, A44C 21/00, B32B 37/10

(54) **Mehrschichtiges Verbundmaterial zur Herstellung von Rohlingen für Münzen**

(71) Anmelder: Bayer MaterialScience AG, 51373 Leverkusen (DE)
(72) Erfinder: Tziovaras, Georgios, 42275 Wuppertal (DE); Pophusen, Dirk, 51467 Bergisch Gladbach (DE)

(57) **Zusammenfassung**

Die vorliegende Erfindung betrifft ein mehrschichtiges Verbundmaterial enthaltend eine Kunststoffmittelschicht und zwei Metallaußenschichten, welche mit geeigneten Klebeschichten miteinander verbunden sind, ein Verfahren zu dessen Herstellung sowie dessen Verwendung zur Herstellung von Rohlingen für Münzen.

## Beschreibung

Die vorliegende Erfindung betrifft ein mehrschichtiges Verbundmaterial enthaltend eine Kunststoffmittelschicht und zwei Metallaußenschichten, welche mit geeigneten Klebeschichten miteinander verbunden sind, ein Verfahren zu dessen Herstellung sowie dessen Verwendung zur Herstellung von Rohlingen für Münzen.

Münzen werden als Zahlungsmittel seit der Antike verwendet. Neben ihrer Vorteile Langlebigkeit, einfache Handhabung, Verwendung bei Verkaufsautomaten, die im täglichen Gebrauch erfahren werden, bieten Münzen auch Nachteile: Sie sind schwer, der Materialwert kann über dem Kaufwert der Münze liegen, sie sind relativ leicht zu fälschen und die Unterscheidung zwischen Echt- und Falschgeld an Verkaufsautomaten ist oft unpräzise oder gar nicht möglich.

Deshalb sind Münzhersteller seit einiger Zeit auf der Suche nach alternativen Materialien für Münzen.

Dabei stellen sich gleich mehrere Herausforderungen, nämlich, ein Material zu finden, das die Herstellungskosten der Münzen reduziert, leichter ist als Metall jedoch ausreichende Stabilität bietet, langlebig ist, visuell einen hochwertigen Eindruck bietet und mit den heutigen Herstellungsverfahren von Münzen weitgehend kompatibel ist. Insbesondere sollte es mit Blick auf die Punkte Kosten und Kompatibilität zu Herstellungsverfahren von Münzen möglich sein, ein geeignetes Martial in einem kontinuierlichen Verfahren herzustellen und als Band - ähnlich zu den Metallbändern die heute für Münzen verwendet werden - zu liefern.

Demnach bestand die Aufgabe der vorliegenden Erfindung darin, ein geeignetes Material aufzufinden, das diesen Anforderungen entspricht und sich für den Einsatz zur Herstellung von Münzrohlingen bzw. Münzen eignet.

Überraschend wurde diese Aufgabe durch ein mehrschichtiges Verbundmaterial gemäß der vorliegenden Erfindung gelöst, welches alle o.g. Anforderungen erfüllt.

Gegenstand der vorliegenden Erfindung ist ein mehrschichtiges Verbundmaterial, dadurch gekennzeichnet, dass es
- zwei Außenschichten (A) enthaltend wenigstens ein Metall ausgewählt aus der Gruppe der Münzmetalle, Edelstahl oder Aluminium
- wenigstens eine Mittelschicht (M) enthaltend wenigstens einen thermoplastischen Kunststoff, die sich zwischen den beiden Außenschichten (A) befindet und
- jeweils eine Zwischenschicht (Z) enthaltend wenigstens einen Schmelzkleber zwischen der jeweiligen Außenschicht (A) und der Mittelschicht (M)
aufweist.

Das erfindungsgemäße mehrschichtige Verbundmaterial hat gegenüber Metall ein deutlich reduziertes Gewicht und bietet ausreichende Stabilität, es ist langlebig, vermittelt durch die Außenschichten aus Münzmetallen, Edelstahl bzw. Aluminium visuell einen hochwertigen Eindruck und ist in der Herstellung preiswerter als herkömmliche Metallmünzen. Zudem kann das erfindungsgemäße mehrschichtige Verbundmaterial in einem kontinuierlichen Verfahren hergestellt werden und es ist zudem möglich es in Form von Bändern herzustellen, so dass es ohne große Veränderungen in die bestehenden Herstellprozesse für Münzrohlinge und Münzen eingesetzt werden kann.

Metall/Kunststoff-Verbundmaterialien aus Stahl und Kunststoff waren dem Fachmann zwar in der Vergangenheit bereits bekannt, jedoch wurden diese bisher in der Literatur nicht zur Herstellung von Münzen beschrieben. Zudem hätten die bekannten Verbundmaterialien für diesen Zweck signifikante Nachteile aufgewiesen.

Von der Firma Thyssen Kupp wird bereits seit Jahren ein Metall/Kunststoff-Verbundmaterial Handelsnamen Bondal^{®} angeboten. Bei diesem Verbundmaterial handelt es sich um einen Metall-Kunststoff-Aufbau mit Außenschichten aus Stahl und einen Kunststoffkern. Dabei wird die Kunststoffschicht sehr dünn gehalten, da sie lediglich zu Schallreduzierung des Blechs dient. Schon aufgrund der Stahlaußenhaut ist ein solches Material für Münzen nicht das Mittel der Wahl, da Stahlschichten der verwendeten Dicken die für die erforderliche Prägung von Münzen in der Regel die erforderliche Duktilität fehlt. Auch der dünne Innenkern kann bei einer Verarbeitung zu Münzen zu Problemen hinsichtlich mangelnder Druckfestigkeit beim Prägen der Münze führen, sowie den Anforderungen an deren Formbeständigkeit bei jahrzehntelangem Gebrauch und dem ansprechenden Aussehen nicht gerecht werden.

Des Weiteren werden von Thyssen Kupp Verbundmaterialien angeboten, bei denen die Metallschichten dünn gehalten werden, und der Polymerkern den Hauptanteil des Materials bildet (vgl. Zeitschrift Ingenieur Forum April 2010, Beitrag auf der Seite 33-34). Das Material besteht aus zwei Stahlfolien in den Dicken 0,2 - 0,25 mm und einen Kunststoffkern der Dicke 0,4 -1 mm. Der Fokus für die Anwendung dieser Materialien liegt im Automobilbau, insbesondere als Material für die Beplankung von Fahrzeugen. Auch hier tritt aber die Problematik der geringen Duktilität der Stahlaußenschichten für die erforderliche Prägung sowie der fehlende hochwertige visuelle Eindruck auf.

Die bekannten Verbundmaterialien dienten vorwiegend der Gewichtsreduktion in Anwendungen, in denen die Stahloberflächen nachträglich ohnehin mittels Lackierung oder sonstiger Nachbehandlung hinsichtlich ihres visuellen Eindrucks nachbehandelt wurden. Daher sind solche bekannten Materialien auf Stahlaußenflächen ausgerichtet.

Zur Herstellung von Münzen ist es aber erforderlich, unterschiedliche hochwertige Materialien für die Außenschichten ohne zusätzliche Nachbehandlung einsetzen zu können, da eine solche Nachbehandlung bei anschließenden Prägevorgang zerstört würde, und solche Außenschichten in beständiger Weise auf geeigneten Kunststoffmaterialien zur Haftung bringen zu können.

Das erfindungsgemäße mehrschichtige Verbundmaterial weist diese Nachteile nicht auf.

Bevorzugt enthält die Außenschicht (A) des erfindungsgemäßen mehrschichtigen Verbundmaterials mehr als 80 Gew.-%, bevorzugt zu mehr als 90 Gew.-%, besonders bevorzugt zu mehr als 95 Gew.-%, bezogen auf das Gesamtgewicht der Außenschicht, eines Metalls ausgewählt aus der Gruppe der Münzmetalle, Edelstahl oder Aluminium.

Bevorzugt handelt es sich bei dem Edelstahl um rostfreien Stahl. Dies verhindert eine Korrosion der aus dem Verbundmaterial später herzustellenden Münzen während des Gebrauchs.

Zu der Gruppe der Münzmetalle zählen dabei bevorzugt die Metalle Kupfer, Silber, Gold, welche gegebenenfalls auch als Legierungen miteinander oder mit weiteren Metallen, wie z.B. Zinn, Zink, Edelmetallen etc., verwendet werden können. Besonders bevorzugt handelt es sich bei dem Metall in den Außenschichten um Kupfer, Silber oder Aluminium oder Legierungen enthaltend wenigstens eines dieser Metalle, wie z.B. Messing.

Die die Außenschicht (A) des erfindungsgemäßen mehrschichtigen Verbundmaterials kann daher bevorzugt auch mehr als 80 Gew.-%, bevorzugt zu mehr als 90 Gew.-%, besonders bevorzugt zu mehr als 95 Gew.-%, bezogen auf das Gesamtgewicht der Außenschicht, einer Legierung wenigstens eines Metalls ausgewählt aus der Gruppe der Münzmetalle, Edelstahl oder Aluminium mit wenigstens einem weiteren Metall enthalten.

Besonders bevorzugt enthält die Außenschicht (A) des erfindungsgemäßen mehrschichtigen Verbundmaterials mehr als 80 Gew.-%, bevorzugt zu mehr als 90 Gew.-%, besonders bevorzugt zu mehr als 95 Gew.-%, bezogen auf das Gesamtgewicht der Außenschicht, eines Metalls ausgewählt aus der Gruppe der Münzmetalle oder Aluminium oder einer Legierung wenigstens eines Metalls ausgewählt aus der Gruppe der Münzmetalle oder Aluminium mit wenigstens einem weiteren Metall.

Bevorzugt weisen die Außenschichten (A) des erfindungsgemäßen mehrschichtigen Verbundmaterials jeweils eine Schichtdicke von weniger als 200 µm, bevorzugt von 150 µm oder weniger auf. Dies Außenschichten weisen vorzugsweise eine Schichtdicke von 10 bis 150 µm, bevorzugt von 15 bis 100 µm, besonders bevorzugt von 20 bis 75 µm auf. Dies bietet den Vorteil der Gewichts- und Kostenreduktion, stellt aber auf der anderen Seite sicher, dass eine Prägung der Außenschichten bei der Herstellung der Münzen noch möglich ist.

Bevorzugt handelt es sich bei dem oder den thermoplastischen Kunststoff(en) in der Mittelschicht (M) um Polycarbonate oder Copolycarbonate auf Basis von Diphenolen, Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, Polyolefine, wie beispielhaft und vorzugsweise transparente Polypropylentypen oder Polyolefine auf der Basis von cyclischen Olefinen (z.B. TOPAS^{®}, Hoechst), Polyamide, Poly- oder Copolykondensate der Terephthalsäure oder Naphthalindicarbonsäure, wie beispielhaft und vorzugsweise Poly- oder Copolyethylenterephthalat (PET oder CoPET), glycol-modifiziertes PET (PETG) oder Poly- oder Copolybutylenterephthalat (PBT oder CoPBT), Poly- oder Copolyethylennaphthalat (PEN oder CoPEN) oder Mischungen aus den vorangehend genannten.

Besonders bevorzugt sind Polycarbonate oder Copolycarbonate, Polyamide oder Poly- oder Copolybutylenterephthalate. Ganz besonders bevorzugt sind Polycarbonate oder Copolycarbonate. Insbesondere bevorzugt sind solche Polycarbonate oder Copolycarbonate mit mittleren Molekulargewichten M_{w} von 500 bis 100 000, bevorzugt von 10 000 bis 80 000, besonders bevorzugt von 15 000 bis 40 000 oder Blends enthaltend wenigstens ein solches Polycarbonat oder Copolycarbonat.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate oder Copolycarbonate kann in bekannter Weise aus Diphenolen, Kohlensäurederivaten, gegebenenfalls Kettenabbrechern und gegebenenfalls Verzweigern mittels Lösungs- bzw. Phasengrenzflächenkondensation oder Schmelzekondensation erfolgen. Einzelheiten der Herstellung von Polycarbonaten oder Copolycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1 -Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Geeignete Kohlensäurederivate können beispielsweise für die Herstellung mittels Lösungskondensation, insbesondere Phasengrenzflächenkondensation, Phosgen oder für die Herstellung mittels Schmelzekondensation Diarylcarbonate der allgemeinen Formel (II) sein, 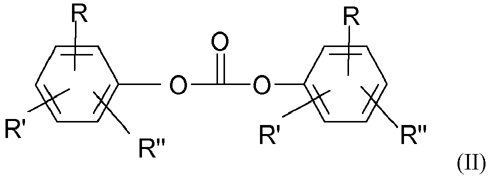 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R"' für Wasserstoff, lineares oder verzweigtes C₁-C₃₄-Alkyl, C₇-C₃₄-Alkylaryl oder C₆-C₃₄-Aryl steht.

Besonders bevorzugte Diarylverbindungen sind Diphenylcarbonat, 4-tert-Butylphenyl-phenylcarbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 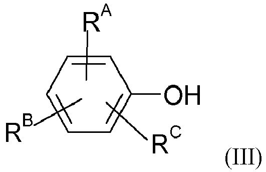 wobei
- R^{A}: für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Bevorzugte Verzweiger sind 3,3-Bis-(3-methyl-4-hydroxyphenyl)-2-oxo-2,3-dihydroindol und 1,1,1 -Tri-(4-hydroxyphenyl)-ethan.

Polycarbonate oder Copolycarbonate weisen insbesondere den Vorteil auf, dass sie die notwendige Stabilität für das nachträgliche Stanzen und Prägen der Münzen aufweisen. Auch die weiteren Anforderungen an Münzen bzw. Münzrohlinge für den nachfolgenden Herstellprozess werden mit Polycarbonaten oder Copolycarbonaten erfüllt, da sie die entsprechende Temperaturbeständigkeit für die weitere Verarbeitung, Formstabilität bei hohen und niedrigen Temperaturen, insbesondere auch ausreichende Biegefestigkeit beim üblichen Umgangsverhalten mit Münzen, um keine bleibende Verformung der Münzen zuzulassen, und die erforderliche Druckfestigkeit beim Prägen bieten. Zudem weisen Polycarbonate oder Copolycarbonate all diese Eigenschaften dauerhaft auf und ändern nicht im Laufe der Gebrauchszeit für Münzen ihre Materialeigenschaften. Zudem sind Polycarbonate oder Copolycarbonate deutlich preiswerter als die bisher verwendeten Metallkerne von Münzen.

Das erfindungsgemäße mehrschichtige Verbundmaterial kann neben der Mittelschicht (M) zwischen den Außenschichten (A) weitere Schichten enthaltend wenigstens einen thermoplastischen Kunststoff aufweisen. Dabei können die verschiedenen Schichten enthaltend wenigstens einen thermoplastischen Kunststoff zusammen mittels Coextrusion, einzeln mittels Extrusion und anschließender Lamination oder Extrusionslamination oder Kombinationen dieser Verfahren hergestellt werden.

In einer bevorzugten Ausführungsform der Erfindung enthält das erfindungsgemäße mehrschichtige Verbundmaterial jedoch nur eine solche Schicht, nämlich die Mittelschicht (M), enthaltend wenigstens einen thermoplastischen Kunststoff, die sich zwischen den beiden Außenschichten (A).

Es ist bei der Auswahl des Schmelzklebers insbesondere von Bedeutung eine ausreichende Haftung zwischen den metallaußenschichten und der oder den thermoplastischen Kunststoffschicht(en) zu erzeugen. Hierzu eignen sich eine Reihe von bekannten Schmelzklebern.

Bei dem Schmelzkleber in der Zwischenschicht (Z) handelt es sich bevorzugt um wenigstens ein thermoplastisches Polyurethan, Co-Polyamid oder Co-Polyester, bevorzugt um ein thermoplastisches Polyurethan.

Thermoplastische Polyurethane (TPU) werden zumeist aus linearen Polyolen (Makrodiolen), wie Polyester-, Polyether- oder Polycarbonatdiolen, organischen Diisocyanaten und gegebenenfalls kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Bevorzugte thermoplastische Polyurethane für die Schmelzklebeschichten (Z) im erfindungsgemäßen Verbundmaterial sind Reaktionsprodukte aus den genannten
a) organischen Diisocyanaten
b) Polyesterdiolen und
c) gegebenenfalls Kettenverlängerern.

Als thermoplastische Polyurethane sind besonders bevorzugt lineare Polyesterpolyurethane, die gegebenenfalls wenigstens ein höherfunktionelles Polyisocyanat als Vernetzer enthalten.

Als Diisocyanate a) können aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Bevorzugte organische Diisocyanate a) sind aromatische Diisocyanate, besonders bevorzugt 2,4-und/oder 2,6- Toluylendiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanatoder Gemischen aus diesen.

Bevorzugte Polyesterdiole besitzen vorzugsweise zahlenmittleren Molekulargewichte M̅ₙ 500 bis 10.000 g/mol, besonders bevorzugt 1000 bis 6000 g/mol. Sie können sowohl einzeln als auch in Form von Mischungen untereinander zur Anwendung kommen.

Die zahlenmittleren Molekulargewichte können mittels OH-Zahl Bestimmung nach der gemäß der ASTM D 4274 bestimmt werden.

Geeignete und bevorzugte Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Maleinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie z.B. Carbonsäurediester mit 1 bis 4 Kohlenstoffatomen im Alkoholrest, Carbonsäureanhydride oder Carbonsäurechloride zu verwenden. Beispiele für mehrwertige Alkohole sind Siole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyesterdiole vorzugsweise verwendet werden Ethandiolpolyadipate, 1,4-Butandiol-polyadipate, Ethandiol-1,4-butandiol-polyadipate, 1,6-Hexandiolneopentylglykol-polyadipate, 1,6-Hexandiol-1,4-butandiol-polyadipate und Polycaprolactone. Die Polyester-Diole können einzeln oder in Form von Mischungen untereinander zur Anwendung kommen.

Besonders bevorzugte Polyesterdiole b) sind beispielsweise solche auf Basis von aliphatischen Dicarbonsäuren, wie Bernsteinsäure, Maleinsäure, Glutarsäure, Adipinsäure, Korksäure, Azelainsäure und Sebacinsäure und den vorangehend genannten Diole mit 2 bis 10, vorzugsweise 2 bis 6 Kohlenstoffatomen, wie z.B. Ethylenglykol, 1,4-Dihydroxybutan, 1,6-Dihydroxyhexan oder deren Gemischen, ganz besonders bevorzugt solche auf Basis von Adipinsäure, und geeigneten Glykolen wie z.B. Ethylenglykol, 1,4-Dihydroxybutan, 1,6-Dihydroxyhexan oder deren Gemischen.

Als Kettenverlängerungsmittel werden beispielsweise und bevorzugt Diole oder Diamine mit einem Molekulargewicht von 60 bis 500 g/mol, vorzugsweise aliphatische Diole mit 2 bis 14 Kohlenstoffatomen eingesetzt, wie z.B. 1,2-Ethandiol (Ethylenglykol), 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Diolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,2-Propandiol, 1,3-Propandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Besonders bevorzugte Kettenverlängerer c) sind beispielsweise Diole wie Ethylenglykol, 1,4-Butandiol, 1,6-Hexandiol oder deren Gemische.

Die thermoplastischen Polyurethane können gegebenenfalls Katalysatoren d) enthalten. Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den thermoplastischen Polyurethanen beträgt in der Regel etwa 0 bis 5 Gew.-%, bevorzugt 0 bis 2 Gew.-%, bezogen auf das Gesamtgewicht des TPU.

Die thermoplastischen Polyurethane (TPU) können gegebenenfalls als Hilfs- und Zusatzstoffe e) 0 bis zu maximal 20 Gew.-%, bevorzugt 0 bis 10 Gew.-%, bezogen auf das Gesamtgewicht des TPU, der üblichen Hilfs- und Zusatzstoffe enthalten. Typische Hilfs- und Zusatzstoffe sind Pigmente, Farbstoffe, Flammschutzmittel, Stabilisatoren gegen Alterungs- und Witterungseinflüsse, Weichmacher, Gleit- und Entformungsmittel, Kettenabbrecher, fungistatisch und bakteriostatisch wirkende Substanzen sowie Füllstoffe und deren Mischungen.

Bevorzugt können als solche Zusatzstoffe unter anderem gegenüber Isocyanaten monofunktionelle Verbindungen in Anteilen bis zu 2 Gew.-%, bezogen auf das Gesamtgewicht des thermoplastischen Polyurethans, als sogenannte Kettenabbrecher oder Entformungshilfen eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe, beispielsweise Polycarbonate, sowie Weichmacher und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs-und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Bei den thermoplastischen Polyurethanen für die Schmelzklebeschichten (Z) handelt es sich besonders bevorzugt um Umsetzungsprodukte von
a) einem oder mehreren aromatischen Diisocyanaten, oder Gemischen aus diesen,
b) einem oder mehreren Polyesterdiolen mit mittleren Molekulargewichten (Mₙ) von 500 bis 6.000, bevorzugt von 1.000 bis 4.000, bevorzugt solchen auf Basis von aliphatischen Dicarbonsäuren, wie z.B. und bevorzugt Bernsteinsäure, Maleinsäure, Glutarsäure, Adipinsäure, Korksäure, Azelainsäure und Sebacinsäure, besonders bevorzugt Adipinsäure und geeigneten Diolen mit 2 bis 10, vorzugsweise 2 bis 6 Kohlenstoffatomen, wie z.B. und besonders bevorzugt Ethylenglykol, 1,4-Dihydroxybutan, 1,6-Dihydroxyhexan oder deren Gemischen
c) gegebenenfalls Diol-Kettenverlängerern, bevorzugt Diolen wie Ethylenglykol, 1,4-Butandiol, 1,6-Hexandiol oder deren Gemische,
d) gegebenenfalls Katalysatoren und
e) gegebenenfalls weiteren Hilfs- und Zusatzstoffen
wobei das Molverhältnis der NCO-Gruppen in a) zu den gegenüber Isocyanat reaktiven Gruppen in b) und c) 0,9 : 1 bis 1,1 : 1, bevorzugt 0,95:1 bis 1:1, beträgt.

Bevorzugt gelangen dabei pro Mol Polyesterdiol gegebenenfalls 0,1 bis 2 Mol Kettenverlängerer bzw. Kettenverlängerergemisch zum Einsatz.

Es kann zudem vorteilhaft sein, geringe Mengen eines höherfunktionellen Polyisocyanats, beispielsweise an Tris-(6-isocyanatohexyl)-biuret zuzugeben, um die mechanischen Eigenschaften einer zur Herstellung des erfindungsgemäßen Verbundmaterials eingesetzten Schmelzklebefolie zu verbessern.

Solche bevorzugten Schmelzkleber beispielsweise in Form von Schmelzklebefolien der Firma Epurex, mit dem Handelsnamen Platilon^{®} kommerziell erhältlich.

Bevorzugt handelt es sich bei dem erfindungsgemäßen mehrschichtigen Verbundmaterial um eine Verbundfolie.

Weiterhin bevorzugt weist das erfindungsgemäße mehrschichtige Verbundmaterial eine Gesamtdicke von 500 µm bis 4,0 mm, bevorzugt von 1,0 mm bis 3,5 mm, besonders bevorzugt von 1,2 mm bis 2,5 mm auf.

Das erfindungsgemäße Verbundmaterial weist eine ausreichende Druckfestigkeit für den Prägeprozess, eine ausreichende Biegefestigkeit für den dauerhaften Einsatz als Münze sowie dauerhafte Beständigkeit und Formstabilität bei hohen und niedrigen Temperaturen auf. Außerdem lassen sich mit dem erfindungsgemäßen Verbundmaterial die Kosten für die Herstellung von Münzen sowie deren Gewicht reduzieren. Trotz einer solchen Gewichts- und Kostenersparnis vermittelt das erfindungsgemäße Verbundmaterial aber visuell einen vergleichbar zu Vollmetallmünzen hochwertigen Eindruck.

Das erfindungsgemäße Verbundmaterial lässt sich kontinuierlich oder diskontinuierlich herstellen. Besonders vorteilhaft ist, dass sich das erfindungsgemäße Verbundmaterial in einem kontinuierlichen Rolle-zu-Rolle-Verfahren herstellen lässt. Dabei kann das erfindungsgemäße Verbundmaterial bevorzugt in Form einer Verbundfolie, vergleichbar zu den heute in der Münzherstellung verwendeten Bandmaterialien hergestellt werden, so dass es weitgehend mit den bestehenden Prozessen zur Münzherstellung kompatibel ist.

Gegenstand der vorliegenden Erfindung ist daher ein Verfahren zur Herstellung des erfindungsgemäßen mehrschichtigen Verbundmaterials, dadurch gekennzeichnet, dass ein Schichtaufbau aus wenigstens zwei Metallschichten, wenigstens zwei Schmelzklebeschichten und wenigstens einer Kunststoffschicht enthaltend wenigstens einen thermoplastischen Kunststoff derart gebildet wird, dass die Kunststoffschicht zwischen den beiden Schmelzklebeschichten angeordnet ist, die beiden Metallschichten von außen auf den Schmelzklebeschichten angeordnet sind und der Schichtaufbau anschließend bei einer Temperatur von 100°C bis 190°C und einem Druck von 3 N/cm² bis 400 N/cm² laminiert wird.

Dabei können die beiden Metallschichten und/oder die beiden Schmelzklebeschichten und/oder die Kunststoffschicht aus separaten Folien gebildet werden. Bevorzugt werden sowohl die beiden Metallschichten sowie die beiden Schmelzklebeschichten aus jeweils separaten Folien gebildet. In dieser Ausführungsform wird dann ein Schichtaufbau aus wenigstens zwei Metallfolien, wenigstens zwei Schmelzklebefolien und wenigstens einer Kunststoffschicht enthaltend wenigstens einen thermoplastischen Kunststoff derart gebildet wird, dass die Kunststoffschicht zwischen den beiden Schmelzklebefolien angeordnet ist und die beiden Metallfolien von außen auf die Schmelzklebefolien gelegt werden und der Aufbau anschließend bei den genannten Bedingungen laminiert wird.

Es ist auch möglich, zur Herstellung bereits vorab Teillaminate aus zwei oder mehr Schichten herzustellen und diese anschließend zu dem erfindungsgemäßen Verbundmaterial zu laminieren. Hierzu können beispielsweise Laminate aus jeweils einer Kunststoff- und Klebeschicht mit einer Metallfolie zu einem Dreischichtaufbar laminiert werden. Ein solcher Dreischichtaufbau kann dann wiederum im Anschluss mit den Kunststoffschichten nach innen gerichtet zum erfindungsgemäßen Verbundmaterial laminiert werden. Dabei verbinden sich die beiden Kunststoffschichten zur Mittelschicht (M). Alternativ kann beispielsweise auch ein Laminat aus Mittelschicht zwischen zwei Klebeschichten vorab hergestellt und anschließend mit zwei Metallfolien außen zum erfindungsgemäßen Verbundmaterial laminiert werden. Weitere Beispiele für die Kombination vorgefertigter Teillaminate miteinander oder mit einzelnen Folien zur Herstellung des erfindungsgemäßen Verbundmaterials sind möglich.

Es ist auch möglich, alle Schichten im erfindungsgemäßen Verfahren durch separate Folien zu bilden. Bei dieser Ausführungsform wird dann ein Folienstapel aus wenigstens zwei Metallfolien, wenigstens zwei Schmelzklebefolien und wenigstens einer Kunststofffolie enthaltend wenigstens einen thermoplastischen Kunststoff derart gebildet wird, dass die Kunststofffolie zwischen den beiden Schmelzklebefolien angeordnet ist und die beiden Metallfolien von außen auf die Schmelzklebefolien gelegt werden und der Folienstapel anschließend bei den genannten Bedingungen laminiert wird.

Das erfindungsgemäße Verfahren kann kontinuierlich oder diskontinuierlich durchgeführt werden.

In einer bevorzugten Ausführungsform wird das erfindungsgemäße Verfahren in einem kontinuierlichen Rolle-zu-Rolle-Verfahren durchgeführt.

In einer besonders bevorzugten Ausführungsform wird das erfindungsgemäße Verfahren in einem kombinierten Extrusions-Laminations-Verfahren durchgeführt. Dabei wird der thermoplastische Kunststoff bis zu seinen Schmelzpunkt erhitzt und kontinuierlich durch eine Düse, bevorzugt eine Breitschlitzdüse zwischen die Folien gepresst. Bevorzugt können sowohl die Metallfolien als auch die Schmelzklebefolien als Rollenware in das erfindungsgemäße Verfahren eingesetzt werden. Die Schmelzklebefolien werden von den Rollen abgewickelt und von beiden Seiten der aus der Düse austretenden Kunststoffschmelze zugeführt. Zusätzlich werden die Metallfolien von den Rollen abgewickelt und von beiden Seiten von außen den Schmelzklebefolien zugeführt. Dieser Aufbau wird dann zwischen wenigstens zwei Extrusionswalzen geführt und von diesen zusammengepresst und so laminiert. Auf diese Weise kann unmittelbar der Schichtaufbau Metallfolie/Schmelzklebefolie/thermoplastischer Kunststoff/ Schmelzklebefolie/Metallfolie von den Extrusionswalzen zusammengepresst und laminiert werden und auf eine Rolle aufgewickelt werden.

Diese Verfahrensführung hat den Vorteil, dass das erfindungsgemäße Verbundmaterial in einem einfachen Verfahren direkt als Rollenware hergestellt werden kann, so dass es unmittelbar als Bandmaterial in die Herstellung von Münzrohlingen und Münzen eingesetzt werden kann.

Alternativ zur Herstellung von Rollenware kann das mit dem kontinuierlichen kombinierten Extrusions-Laminations-Verfahren hergestellte Verbundmaterial auch in Bögen bzw. Platten geschnitten werden.

In einer weiteren bevorzugten Ausführungsform kann das erfindungsgemäße Verfahren alternativ zur kontinuierlichen Herstellung in einer diskontinuierlichen Verfahrensführung durchgeführt werden. Dabei kann das erfindungsgemäße Verbundmaterial ebenfalls in Form von Platten oder Bögen hergestellt werden. Für eine diskontinuierliche Verfahrensführung können in einer bevorzugten Ausführungsform Laminierpressen, bevorzugt Etagenpressen eingesetzt werden. Gegebenenfalls können dabei auch gravierte Laminierbleche in den Pressen zum Einsatz kommen.

Beispielsweise können hierfür Etagenpressen verwendet werden, die bis zu 16 Etagen aufweisen. Auch der Einsatz von mehr als 16 Etagen ist möglich. Aus den einzelnen Folien oder Laminaten gebildete Stapel zur Herstellung des erfindungsgemäßen Verbundmaterials werden bei dieser Verfahrensführung in der gewünschten Reihenfolge in die Kassetten der Presse gelegt. Dabei können die Kassetten beispielsweise mit bis zu 10 Lagen bestückt werden, die jeweils durch ein Laminierblech voneinander getrennt werden, wobei die Laminierbleche graviert oder ungraviert sein können. Nach Bestückung der Kassetten werden die Etagen der Presse mit jeweils einer Kassette gefüllt.

Der Vorteil der erfindungsgemäßen Verfahrensführung unter Einsatz von Laminierpessen zur Herstellung des erfindungsgemäßen Verbundmaterials kann darin bestehen, dass das Laminat gegebenenfalls höherem Druck ausgesetzt werden kann. So ist es möglich unter Verwendung von gravierten Laminierblechen bereits während der Lamination, Gravuren in das erfindungsgemäße Verbundmaterial zu pressen. Die Gravuren können dabei sehr präzise in die Oberfläche eingeprägt werden und der Prozess ist schonend für den Kunststoffkern. Anschließend könnten die Münzrohlinge bereits aus den geprägten Verbundplatten oder -bögen ausgestanzt werden. Mit diesem Verfahren können zudem auch thermoplastische Kunststoffe als Material für die Mittelschicht verwendet werden, welche den herkömmlichen Prägeprozessen gegebenenfalls nicht standhalten könnten. Anschließend müssen die geprägten Verbundplatten nur noch ausgestanzt werden.

Das erfindungsgemäße Verbundmaterial eignet sich insbesondere aufgrund seines gegenüber herkömmlichen Vollmetallmünzen deutlich reduzierten Gewichts sowie seiner reduzierten Herstellkosten hervorragend zur Herstellung von Rohlingen für Münzen und zur Herstellung von Münzen.

Gegenstand der vorliegenden Erfindung ist daher auch die Verwendung des erfindungsgemäßen mehrschichtigen Verbundmaterials zur Herstellung von Rohlingen für Münzen, bevorzugt Hybridrohlingen für Münzen.

Weiterhin Gegenstand der vorliegenden Erfindung ist daher auch die Verwendung des erfindungsgemäßen mehrschichtigen Verbundmaterials zur Herstellung von Münzen.

Im Rahmen der Erfindung handelt es sich bei Münzen sowohl um Münzen, die als offizielle Zahlungsmittel dienen können, wie z.B. Geldstücke etc., als auch um Münzen, die nicht als offizielle Zahlungsmittel eingesetzt werden, wie beispielsweise Token für spezielle Automaten etc..

Derartige Münzrohlinge und Münzen, die nicht durchgehend aus Metall bestehen, können auch als sogenannte Hybridrohlinge oder Hybridmünzen bezeichnet werden.

Weiterhin Gegenstand der vorliegenden Erfindung ist zudem Rohling zur Herstellung von Münzen dadurch gekennzeichnet, dass er
- zwei Außenschichten (A) enthaltend wenigstens ein Metall ausgewählt aus der Gruppe der Münzmetalle, Edelstahl oder Aluminium
- wenigstens eine Mittelschicht (M) enthaltend wenigstens einen thermoplastischen Kunststoff, die sich zwischen den beiden Außenschichten befindet und
- jeweils eine Zwischenschicht (Z) enthaltend wenigstens einen Schmelzkleber zwischen der jeweiligen Außenschicht (A) und der Mittelschicht (M)
aufweist.

Die weiteren Merkmale und Vorzugsbereiche für das erfindungsgemäße mehrschichtige Verbundmaterial gelten für die erfindungsgemäßen Rohlinge analog.

Die erfindungsgemäßen Rohlinge können auf einfache Weise aus einem erfindungsgemäßen mehrschichtigen Verbundmaterial ausgestanzt werden.

Weiterhin Gegenstand der vorliegenden Erfindung ist daher ein Verfahren zur Herstellung von Rohlingen für Münzen, dadurch gekennzeichnet, dass aus dem erfindungsgemäßen mehrschichtigen Verbundmaterial Rohlinge ausgestanzt werden.

Dabei kann entweder vor oder nach dem Ausstanzen eine Prägung erfolgen.

Aus den erfindungsgemäßen Rohlingen hergestellte Münzen weisen nicht nur den Vorteil geringeren Gewichts und günstigerer Herstellkosten auf, sondern weist zudem den gleichen visuell hochwertigen Eindruck auf wie herkömmliche Vollmetallmünzen. Außerdem erfüllen die erfindungsgemäßen Rohlinge zudem die Anforderungen an Biegefestigkeit, Form- und Temperaturbeständigkeit bei der Handhabung sowie Druckfestigkeit beim Prägen.

Es besteht zudem die Möglichkeit, insbesondere in den Kunststoffkern solcher Hybridmünzen, die aus dem erfindungsgemäßen Verbundmaterial hergestellt wurden, Sicherheitsmerkmale, wie z.b. Sicherheitsmarker, einzuarbeiten, über die Fälschungen zu erkennen wären.

Die folgenden Beispiele dienen der beispielhaften Erläuterung der Erfindung und sind nicht als Beschränkung aufzufassen.

### Beispiele

### Beispiel 1: Herstellung eines erfindungsgemäßen Münzrohlings

Gemäß den folgenden Prozessschritten wurden verschiedene erfindungsgemäße Münzrohlinge hergestellt:
a) Laminieren einer weissen Polycarbonatfolie (Makrofol^{®} DE6-4 011211 der Firma Bayer MaterialScience AG; Dicke 700 µm) mit einer TPU-Folie (Platilon^{®} HU2 der Firma Epurex Films GmbH & Co. KG; Dicke 30 µm).
   Das Laminieren erfolgte unter Verwendung eines Rollenlaminators der Firma GMP Laminart, Model 470 LSI. Gewählte Laminiertemperatur: 120°C, Laminergeschwindigkeit 2,4 m/min.
b) Laminieren einer Metallfolie auf das Produkt von a) auf die Seite der TPU Folie. Dazu wurden Mettallfolien von der Firma Schlenk Metallfolien GmbH & Co. KG eingesetzt. Gewählte Metallfolientypen: 30 µm Aluminiumfolie, 30 µm Kupferfolie, 40 µm Messingfolie, 40 µm Edelstahlfolie.
   Das Laminieren erfolgte unter Verwendung eines Rollenlaminators der Firma GMP Laminart, Model 470 LSI. Gewählte Laminiertemperatur: 120°C, Laminergeschwindigkeit 2,4 m/min.
c) Zusätzliches Laminieren der Produkte aus b) bei höherer Temperatur und Druck unter Verwendung einer hydraulischen Etagen-Laminierpresse der Firma Bürckle. Laminierparamter: Temperatur: 175°C, Druck, 240 N/cm². Dauer der Lamination: 10 Minuten. Anschließend wurde der Kühlvorgang der Presse eingeleitet. Nach 15 Minuten wurden die Presse geöffnet und die Laminate entnommen.
   Die Produkte aus b) wurden dabei paarweise unter Verwendung gravierter Laminiebleche laminiert (Gravurübetragung auf die Laminate). Dazu wurden sie in folgender Reihenfolge in die Laminierprese gelegt:
   - graviertes Laminierblech
   - Produkt aus b) mit der Metallseite in Richtung Laminierblech
   - Produkt aus b) mit der Metallseite in Richtung Laminierblech
   - graviertes Laminierblech
d) Das Produkt aus c) wurde entsprechend der Gravuren ausgerichtet und kreisförmig ausgestanzt.

So hat das Verbundmaterial für eine 1 €-Cent Münze folgenden Aufbau: 30 - 40 µm Kupferfolie der Firma Schlenk Metallfolien GmbH & Co. Kg.
10 µm Platilon^{®} HU2, von der Firma Epurex Films GmbH & Co. KG.
1400 µm Makrofol^{®} DE 6-4 011211 in einer Dicke von 700 µm, von der Firma Bayer MaterialScience AG.
10 µm Platilon^{®} HU2, von der Firma Epurex Films GmbH & Co. KG.
30 - 40 µm Kupferfolie der Firma Schlenk Metallfolien GmbH & Co. Kg.

Das Gewicht einer Verbundmünze betrug 0,53 Gramm. Das Gewicht einer Metallmünze hingegen betrug 2,67 Gramm. Die Herstellungskosten einer Verbundmünze betrugen ca. 0,95 €-Cent. Die Herstellungskosten einer Metallmünze betrugen ca. 2,2 €-Cent. Die Herstellungkosten beziehen sich dabei auf die Materialkosten sowie Kosten für das Stanzen bei der Herstellung des Rohlings ohne Prägung.

Der Vergleich zeigt sowohl eine deutliche Gewichtsersparnis als auch eine signifikante Reduktion der Herstellkosten, bei gleichem visuellem Eindruck der Münzen. Beim Stanzen der erfindungsgemäßen Münzen ist der Energieaufwand deutlich niedriger, da die Münzen zu mehr als 90 % aus Kunstsoff bestehen. Dennoch ist überraschend auch die Biegebeständigkeit der Münzen hoch und die Formbeständigkeit der erfindungsgemäßen Münzen völlig ausreichend.

## Patentansprüche

1. Mehrschichtiges Verbundmaterial, **dadurch gekennzeichnet, dass** es
- zwei Außenschichten (A) enthaltend wenigstens ein Metall ausgewählt aus der Gruppe der Münzmetalle, Edelstahl oder Aluminium
- wenigstens eine Mittelschicht (M) enthaltend wenigstens einen thermoplastischen Kunststoff, die sich zwischen den beiden Außenschichten (A) befindet und
- jeweils eine Zwischenschicht (Z) enthaltend wenigstens einen Schmelzkleber zwischen der jeweiligen Außenschicht (A) und der Mittelschicht (M)
aufweist.

2. Mehrschichtiges Verbundmaterial gemäß Anspruch 1, **dadurch gekennzeichnet, dass** die Außenschichten (A) jeweils mehr als 80 Gew.-%, bevorzugt zu mehr als 90 Gew.-%, besonders bevorzugt zu mehr als 95 Gew.-%, bezogen auf das Gesamtgewicht der Außenschicht, eines Metalls ausgewählt aus der Gruppe der Münzmetalle, Edelstahl oder Aluminium enthält.

3. Mehrschichtiges Verbundmaterial gemäß Anspruch 1 oder 2, **dadurch gekennzeichnet, dass** es sich bei dem Metall in den Außenschichten (A) bevorzugt um Kupfer, Silber oder Aluminium, eine Legierung enthaltend wenigstens eines dieser Metalle oder Edelstahl handelt.

4. Mehrschichtiges Verbundmaterial gemäß wenigstens einem der Ansprüche 1 bis 3, **dadurch gekennzeichnet, dass** es sich bei dem Schmelzkleber in der Zwischenschicht (Z) um wenigstens ein thermoplastisches Polyurethan, Co-Polyamid oder Co-Polyester, bevorzugt um ein thermoplastisches Polyurethan handelt.

5. Mehrschichtiges Verbundmaterial gemäß wenigstens einem der Ansprüche 1 bis 4, **dadurch gekennzeichnet, dass** es sich bei dem oder den thermoplastischen Kunststoff(en) in der Mittelschicht (M) um Polycarbonate oder Copolycarbonate auf Basis von Diphenolen, Poly-oder Copolyacrylate, Poly- oder Copolymethacrylate, Poly- oder Copolymere mit Styrol, thermoplastische Polyurethane, Polyolefine, Poly- oder Copolykondensate der Terephthalsäure oder Naphthalindicarbonsäure oder Mischungen aus diesen, bevorzugt um Polycarbonate oder Copolycarbonate auf Basis von Diphenolen, Poly- oder Copolyacrylate, Poly- oder Copolymethacrylate, Poly- oder Copolykondensate der Terephthalsäure oder Naphthalindicarbonsäure oder Mischungen aus diesen handelt.

6. Mehrschichtiges Verbundmaterial gemäß wenigstens einem der Ansprüche 1 bis 5, **dadurch gekennzeichnet, dass** es sich bei dem Verbundmaterial um eine Verbundfolie handelt.

7. Mehrschichtiges Verbundmaterial gemäß wenigstens einem der Ansprüche 1 bis 6, **dadurch gekennzeichnet, dass** es eine Gesamtdicke von 500 µm bis 4,0 mm, bevorzugt von 1,0 mm bis 3,5 mm, besonders bevorzugt von 1,2 mm bis 2,5 mm aufweist.

8. Mehrschichtiges Verbundmaterial gemäß wenigstens einem der Ansprüche 1 bis 7, **dadurch gekennzeichnet, dass** die Außenschichten (A) jeweils eine Schichtdicke von 10 bis 150 µm, bevorzugt von 15 bis 100 µm, besonders bevorzugt von 20 bis 75 µm aufweist.

9. Verfahren zur Herstellung eines mehrschichtigen Verbundmaterials gemäß wenigstens einem der Ansprüche 1 bis 8, **dadurch gekennzeichnet, dass** ein Schichtaufbau aus wenigstens zwei Metallschichten, wenigstens zwei Schmelzklebeschichten und wenigstens einer Kunststoffschicht enthaltend wenigstens einen thermoplastischen Kunststoff derart gebildet wird, dass die Kunststoffschicht zwischen den beiden Schmelzklebeschichten angeordnet ist, die beiden Metallschichten von außen auf den Schmelzklebeschichten angeordnet sind und der Schichtaufbau anschließend bei einer Temperatur von 100°C bis 190°C und einem Druck von 3 N/cm² bis 400 N/cm² laminiert wird.

10. Verfahren gemäß Anspruch 9, **dadurch gekennzeichnet, dass** es in einem kontinuierlichen Rolle-zu-Rolle-Verfahren durchgeführt wird.

11. Verfahren gemäß Anspruch 9, **dadurch gekennzeichnet, dass** es diskontinuierlich unter Einsatz von Laminierpressen, bevorzugt Etagenpressen hergestellt wird und gegebenenfalls die Laminierbleche der Pressen graviert sind.

12. Verwendung eines mehrschichtigen Verbundmaterials gemäß wenigstens einem der Ansprüche 1 bis 8 zur Herstellung von Rohlingen für Münzen oder Token, bevorzugt Hybridrohlingen für Münzen.

13. Verwendung eines mehrschichtigen Verbundmaterials gemäß wenigstens einem der Ansprüche 1 bis 8 zur Herstellung von Münzen.

14. Rohling zur Herstellung von Münzen **dadurch gekennzeichnet, dass** er
- zwei Außenschichten (A) enthaltend wenigstens ein Metall ausgewählt aus der Gruppe der Münzmetalle, Edelstahl oder Aluminium
- wenigstens eine Mittelschicht (M) enthaltend wenigstens einen thermoplastischen Kunststoff, die sich zwischen den beiden Außenschichten (A) befindet und
- jeweils eine Zwischenschicht (Z) enthaltend wenigstens einen Schmelzkleber zwischen der jeweiligen Außenschicht (A) und der Mittelschicht (M)
aufweist.

15. Verfahren zur Herstellung von Rohlingen gemäß Anspruch 14, **dadurch gekennzeichnet, dass** aus einem mehrschichtigen Verbundmaterial gemäß wenigstens einem der Ansprüche 1 bis 8 Rohlinge ausgestanzt werden.
